(19)

Europäisches Patentamt

European Patent Office

Office européen des brevets

(11) **EP 2 982 947 A1**

(12) **EUROPEAN PATENT APPLICATION**

(43) Date of publication:
10.02.2016 Bulletin 2016/06

(51) Int Cl.:
*G01J 3/02* (2006.01)    *G01J 3/44* (2006.01)
*G01J 3/10* (2006.01)

(21) Application number: 14002783.0

(22) Date of filing: 08.08.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Baden-Württemberg Stiftung gGmbH
70174 Stuttgart (DE)

(72) Inventors:
• Steinle, Tobias
70499 Stuttgart (DE)
• Steinmann, Andy
70825 Korntal-Münchingen (DE)
• Giessen, Harald
67297 Marnheim (DE)

(74) Representative: Müller-Boré & Partner
Patentanwälte PartG mbB
Friedenheimer Brücke 21
80639 München (DE)

(54) **Systems and methods for coherent Raman spectroscopy**

(57)    A system (1; 2; 3) for coherent Raman spectroscopy, comprises a first optical parametric amplifier (30) providing a first light pulse (100), a pulsed laser (20) providing a second light pulse (200) such that a first fraction (201) of the second light pulse (200) pumps the first optical parametric amplifier (30), and a cw-laser (10) seeding the first optical parametric amplifier (30). Therein, the first light pulse (100) and a second fraction (202) of the second light pulse (200) are converted into a synchronised pump pulse (103) and Stokes pulse (203) for coherent Raman spectroscopy with a predetermined tunable frequency difference between the pump pulse (103) and the Stokes pulse (203).

Figure 4

EP 2 982 947 A1

## Description

The invention relates to systems and methods for coherent Raman spectroscopy.

Raman spectroscopy is a spectroscopic technique used to observe vibrational, rotational, and other low-frequency energy modes in a sample. It relies on inelastic scattering, called Raman scattering, of monochromatic light. The light interacts with molecular vibrations, phonons or other excitations in the sample, resulting in the energy of the light photons being shifted up or down. The shift in energy gives information about the vibrational modes in the sample.

Typically, the sample is illuminated with a light beam interacting with the sample. The interaction of the light with the sample may include elastic Rayleigh scattering and inelastic Raman scattering. The resulting light exiting the sample is examined to provide conclusions about the sample.

A typical apparatus for Raman spectroscopy comprises a microscope holding the sample, a detection unit, and a generator providing at least one light beam guided into the microscope and used to initiate Raman scattering in the sample. Raman spectroscopy enables nondestructive, chemically-selective microscopic pictures in a high-resolution of less than 1 $\mu$m.

Particularly powerful due to its very high signal levels and high imaging speed is coherent Raman spectroscopy (abbreviated as 'CRS') which includes stimulated Raman scattering (SRS) and coherent anti-Stokes Raman scattering (CARS). A generator for CRS provides two synchronised light pulses called pump and Stokes pulse as input light pulses. In Raman spectroscopy, the pump pulse is absorbed by a specific chemical substance of the sample, thereby exciting the chemical substance to a virtual level. The Stokes pulse stimulates the excited chemical substance to emit a photon at the wavelength of the Stokes pulse, thereby lowering the exited chemical substance into a vibrationally excited state of the electronic ground state. For this, these two pulses are generated so that their frequency difference corresponds to the specific target vibration of the chemical substance.

In the output spectra, the intensity of the pump pulse will be lowered as compared to the input spectra, whereas the intensity of the Stokes pulse will be increased.

To enable the detection of different chemical substances, at least one of the pump pulse and the Stokes pulse is tunable so that the frequency difference between the two pulses may be adjusted to correspond to vibrational frequencies of different chemical substances.

One known generator for the pump pulse and the Stokes pulse combines a pulsed picosecond solid-state laser or a fiber laser with an optical parametric oscillator (abbreviated as 'OPO'). Therein, the OPO is synchronised with the associated solid-state or fiber laser by active control of the resonator length.

Another known generator for the pump pulse and the Stokes pulse is based on a master oscillator split into two arms and then spectrally converted by optically nonlinear fibers.

The known generators for the pump pulse and the Stokes pulse require complex adjustments with fast highly precise controlling. Therefore, the known generators are expensive and require a high maintenance effort. Furthermore, the known generators are so complex that cannot be provided in a compact form. Generators comprising optically nonlinear fibers show intensity noise and, thus, show high shot to shot pulse energy fluctuations and require a complex detector to achieve the required sensitivity, such as an autobalance diode.

It is a problem to provide an improved system and method for coherent Raman spectroscopy, in particular enabling a less complex, less expensive, and/or more compact generator for providing a synchronised pump pulse and Stokes pulse for coherent Raman spectroscopy.

This problem is solved by the subject-matter of the independent claims. Preferred embodiments are the subject of the dependent claims.

A first aspect relates to a system for coherent Raman spectroscopy , comprising a first optical parametric amplifier (abbreviated as 'OPA') providing a first light pulse, a pulsed laser providing a second light pulse such that a first fraction of the second light pulse pumps the first optical parametric amplifier, and a continuous wave-laser (abbreviated as 'cw-laser') seeding the first optical parametric amplifier. Therein, the first light pulse and a second fraction of the second light pulse are converted into a synchronised pump pulse and Stokes pulse for coherent Raman spectroscopy with a predetermined tunable frequency difference between the pump pulse and the Stokes pulse.

The system may be implemented and/or used as generator for the pump pulse and the Stokes pulse in coherent Raman spectroscopy like SRS and/or CARS, in particular as the generator of a Raman microscope. The Raman microscope may further comprise a microscope and a detector, as described in the introduction.

The first OPA generates the first light pulse as a laser pulse that is converted by the system into the pump pulse or Stokes pulse, e.g. into the pump pulse. The first OPA is seeded by the cw-laser which may be implemented as a laser diode. The term cw-laser relates to a continuous wave-laser that emits light in a continuous wave (abbreviated as 'cw'), as opposed to a pulsed light source. Therefore, the first OPA is continuously seeded.

The pulsed laser may be implemented as a solid-state oscillator or fiber oscillator, in particular a mode-locked solid-state laser that provides very stable and short light pulses at a repetition rate. The pulsed laser generates the second light pulse as a laser pulse, a fraction of which is converted by the system into the other required pulse, e.g. the Stokes pulse. A first fraction of the second light pulse is split from the second light pulse and used to pump the first OPA. This means that the first OPA is only pumped at times at which the pulsed laser emits the second light pulse. Therefore, the continuously seeded first OPA only amplifies the continuous seed light when it is pumped by the pulsed laser. This results in a passive synchronisation of the first and the second light pulse.

The first fraction of the second light pulse may be split off the second light pulse by a beam-splitter, e.g. a polarisation beam-splitter, prisma, mirror, etc. The rest of the second light pulse may be used as the second fraction of the second light pulse that is converted into the pump or Stokes pulse. However, one or more further fractions of the second light pulse may be split off and used to pump at least one further OPA of the system, thereby causing a passive synchronisation of the further OPA(s).

The first light pulse provided by the first OPA and the second fraction of the second light pulse provided by the pulsed laser are converted into pump pulse and Stokes pulse. This conversion may be accomplished by a converter. The converter may comprise guiding means to guide the light pulses (e.g. mirror, prisma, waveguides). The guiding means may be arranged to guide the light pulses to a microscope.

The converter may further comprise at least one further OPA which amplifies one of the pulses. The converter may comprise one or more delayers like a delay line arranged to lengthen the travelling distance of one of the light pulses and/or one or more spectral shapers like an etalon arranged to narrow the frequency spectrum of one of the light pulses. The converter may also comprise one or more optically nonlinear materials which interact(s) with one of the light pulses, thereby changing the frequency of the light pulse. Such an optically nonlinear means may, e.g., be implemented as one or more of a second harmonic generation material (abbreviated as 'SHG'), a tapered fiber, etc.

The converter may also comprise means for spectral focusing and/or reducing means for reducing the spectral bandwidth of the pump pulse and/or the Stokes pulse like a filter. Means for spectral focusing are, e.g., known from M. Marangoni et al., "Narrow-bandwidth picosecond pulses by spectral compression of femtosecond pulses in a second-order nonlinear crystal," Opt. Expr. 15, pp. 8884 (2007). The pulse length of the Stokes pulse and/or the pump pulse may be adjustable to different length, e.g., to pulse length between 1 ps and 5 ps.

The synchronised pump pulse and Stokes pulse are synchronised to at least overlap. Thus, the Stokes pulse will be able to stimulate a photon emission of the chemical substance that is excited to a virtual level by the pump pulse.

The generated pump pulse and Stokes pulse comprise a predetermined frequency difference adjusted to correspond to one vibrational frequency of the chemical substance. Therefore, at least one of the pump pulse and the Stokes pulse is tunable. This means that the frequency of said light pulse may be adjusted in a predetermined range. By adjusting the frequency of one of the light pulses, the frequency difference between the two light pulses becomes tunable and may be used to detect different chemical substances by adjusting said frequency difference. For this, the system may comprise tuning means that adjust the frequency of at least one light pulse in the predetermined range.

The first OPA may be implemented as a single-pass OPA which requires no feedback and no further stabilisation, as opposed to an OPO. Furthermore, the system requires no active electronic controlling since it provides a passive synchronisation.

The cw-laser seeding the first OPA provides a very stable stimulation of the first OPA that requires no further stabilisation by a feedback signal.

The system is less complex than the known generators, and at the same time is compact, stable, and cost efficient. Furthermore, since the system provides generation of very accurate and stable pump and Stokes pulses, the detection unit may be simple, e.g. a regular photo diode.

According to an embodiment, an optically nonlinear medium is arranged in the path of the first light pulse or the second light pulse such that the optically nonlinear medium broadens the spectrum of said light pulse. Therein, an adjustable filter filters the broadened light pulse such that only a predetermined bandwidth from the broadened spectrum of the light pulse passes the adjustable filter, thereby providing a tunable light pulse seeding a second OPA. The optically nonlinear medium may be implemented as a self-phase-modulation (abbreviated as: 'SPM') material, e.g. a tapered fiber, that broadens the spectrum of the first light pulse. Thus, a monochromatic fixed-wavelength cw-laser may be used to seed the first OPA. The output of the first OPA is then broadened in the optically nonlinear medium. The spectrum may be broadened to include light of a spectrum of a bandwidth of at least 50 nm, preferably at least 100 nm and, and/or at most 700 nm, preferably at most 200 nm. Such a bandwidth is broad enough to provide a broad tuning range for stimulated Raman scattering. Furthermore, said bandwidth is not so broad that unnecessary power is lost in the adjustable filter or coherence losses increase.

The adjustable filter is adjustable to filter only a predetermined bandwidth from the broadened spectrum. This predetermined bandwidth may be defined as full-width-at-half-maximum (abbreviated as: 'FWHM') bandwidth and may be from 10 nm to 40 nm broad, preferably between 10 nm and 20 nm. In an embodiment, the predetermined filtered bandwidth may be chosen from any wavelength within the broadened spectrum.

Since some power of the first light pulse is lost at the optically nonlinear medium and the adjustable filter, the first light pulse is amplified at the second OPA. The second OPA may be arranged before or after the adjustable filter.

Furthermore, the second OPA may be pumped by a third fraction of the second light pulse. Thus, the passive synchronisation of the Stokes pulse and the pump pulse is preserved.

According to an embodiment, the cw-laser seeding the first OPA is provided as a tunable cw-laser. In this embodiment, a spectral broadening and filtering of the first light pulse (as described above) may be omitted. Thus, the tunable frequency difference between the Stokes pulse and the pump pulse may become tuned directly by the tunable cw-laser and, thus, the seed-wavelength of the first OPA.

According to an embodiment, the pump pulse and the Stokes pulse are provided at repetition rates of at least 10 MHz. Known OPA-based generators for the pump pulse and Stokes pulse provide the light pulses at repetition rates in the kHz range. Prior to the invention, it was assumed that at higher repetition rates, it would not be possible to provide the pulses with enough power to enable conversion in the OPA, since OPAs typically require high peak power driving pulses, which were assumed not to be obtainable at MHz repetition rates.. However, the system according to this embodiment provides very high repetition rates of at least 10 MHz which enable stimulated Raman scattering for spectroscopy at a very high sensitivity resulting from the high repetition rate.

According to an embodiment, the pulsed laser is implemented as mode-locked solid-state laser providing the second light pulse in pulses shorter than 5, 2, and/or 1 picosecond(s). These short light pulses enable the high repetition rates described above.

According to an embodiment, the pulsed laser is provided as Yb:KGW oscillator providing the second fraction of the second light pulse as the Stokes pulse at a wavelength of about 1033 nm. The Yb:KGW solid-state oscillator provides very stable and low-noise light pulses of about 7.4 W at about 41.7 MHz with a pulse duration of about 450 fs.

According to an embodiment, the cw-laser is provided as cw-laser diode providing an effective seeding power of less than 10 $\mu$W or less than 5 $\mu$W. Such effective seeding powers may be achieved when the cw-laser is, e.g., implemented as cost-efficient single-mode cw-diode. The effective seeding power relates to the photons seeding the first OPA while the first fraction of the second light pulse is pumping the first OPA. The effective seeding power may be defined as

$$P_{eff} = P_{cw} * f_{rep} * \tau \, ;$$

wherein $P_{eff}$ is defined as the effective seeding power, $P_{cw}$ is defined as the power of the cw-laser, $f_{rep}$ is defined as the repetition rate of the pulsed laser, and $\tau$ is defined as the pulse duration of the pulsed laser. For example, typical values for this embodiment may be $P_{cw}$ being around 50 mW, $f_{rep}$ being around 40 MHz, and $\tau$ being

around 400 fs. Thus, the resulting effective seeding power $P_{eff}$ would be around 0.8 $\mu$W. Until now, it was not known that such low effective seeding powers are sufficient to seed a generator for stimulated Raman scattering.

In an embodiment, the first optical parametric amplifier comprises an optically nonlinear material with a nonlinearity of at least $d_{eff}$=10 pm/V. The parameter $d_{eff}$ is a measurement of the nonlinearity given in picometers per Volt. Examples of optically nonlinear materials with such high nonlinearities are PPLN crystals (periodically poled lithium niobate) and PPSLT crystals (periodically poled stoichiometric lithium tantalate). The optically nonlinear materials are arranged and provided within the first OPA to amplify the seed light from the cw-laser with a gain factor of at least $10^4$, preferably of at least $10^5$, more preferably of at least $10^6$. This gain factor is high enough to sufficiently amplify the seed light within a single pass during the short pulse time of the pulsed laser.

According to an embodiment, the first light pulse provided by the first optical parametric amplifier is converted into a light pulse that is tunable to a wavelength between 1520 nm and 1640 nm. This embodiment proved to be a particular useful wavelength for stimulating Raman scattering in combination with a Stokes pulse at a wavelength of about 1033 nm.

According to an embodiment, a frequency adjuster is provided in the path of either the first or the second light pulse such that it adjusts and/or alters the frequency of said light pulse, in particular of the light pulse that is converted into the pump pulse. The frequency adjuster may, e.g., be implemented as a SHG material that bisects the wavelength of one of the light pulses. When a SHG-material is used to bisect the wavelength of the tunable light pulse, its bandwidth gets also smaller, thereby sharpening the spectrum of said light pulse. Alternatively, the frequency adjuster may be implemented as an etalon or other element that adjusts and/or alters the frequency of said light pulse to a target frequency. In particular, the frequency adjuster may be implemented as means for spectral compression of said light pulse.

According to a second aspect, a method for providing a synchronised pump pulse and Stokes pulse for coherent Raman spectrocopy comprises:

- providing a first light pulse by a first optical parametric amplifier,
- providing a second light pulse by a pulsed laser
- pumping the first optical parametric amplifier by a first fraction of the second light pulse,
- seeding the first optical parametric amplifier by a cw-laser, and
- converting the first light pulse and a second fraction of the second light pulse into the synchronised pump pulse and Stokes pulse with a predetermined tunable frequency difference between the pump pulse and the Stokes pulse.

The system according to the first aspect may be used to perform the method according to the second aspect.

According to a third aspect, a system for CRS comprises a first optical parametric amplifier providing a first light pulse and a pulsed laser providing a second light pulse. Therein, the first light pulse and at least a fraction of the second light pulse are converted into a synchronised pump pulse and Stokes pulse for CRS with a predetermined tunable frequency difference between the pump pulse and the Stokes pulse. The pump pulse and Stokes pulse are provided at repetition rates of at least 10 MHz. As described above, prior to the invention it was assumed that in OPA-based systems, such high repetition rates would not provide sufficient power to generate the pump pulse and the Stokes pulse for CRS like SRS and/or CARS. The system according to the third aspect may be implemented as a system according to the first aspect and vice versa.

According to a fourth aspect, a method for providing a synchronised pump pulse and Stokes pulse for CRS comprises:

- providing a first light pulse by a first optical parametric amplifier,
- providing a second light pulse by a pulsed laser,
- converting the first light pulse and at least a fraction of the second light pulse into the synchronised pump pulse and Stokes pulse with a predetermined tunable frequency difference between the pump pulse and the Stokes pulse, and
- providing the pump pulse and Stokes pulse at repetition rates of at least 10 MHz.

The system according to the third aspect may be used to perform the method according to the fourth aspect. Furthermore, the method according to the fourth aspect may be part of the method according to the second aspect and vice versa.

According to a fifth aspect, a system for generating a tunable light pulse, comprises a first optical parametric amplifier providing a first light pulse, a cw-laser seeding the first optical parametric amplifier, a pulsed laser pumping the first optical parametric amplifier, an optically nonlinear medium arranged in the path of the first light pulse such that the optically nonlinear medium broadens the spectrum of the first light pulse provided by the first optical parametric amplifier, and an adjustable filter providing the tunable light pulse by filtering the broadened first light pulse such that only a predetermined bandwidth from the broadened spectrum of the first light pulse passes the adjustable filter.

The system according to the fifth aspect may be part of the system according to the first and/or third aspect. Therein, the system according to the fifth aspect may be used to generate the first light pulse as tunable first light pulse. The pulsed laser may pump the first OPA with a first fraction of the second light pulse.

According to a sixth aspect, a method for providing a tunable light pulse, comprises:

- providing a first light pulse by a first optical parametric amplifier,
- continuously seeding the first optical parametric amplifier,
- pumping the first optical parametric amplifier in pulses,
- broadening the spectrum of the first light pulse provided by the first optical parametric amplifier with an optically nonlinear medium, and
- filtering the broadened light pulse such that only a predetermined bandwidth from the broadened spectrum of the first light pulse is used as the tunable light pulse.

The method according to the sixth aspect may be used to operate the system according to the fifth aspect. Furthermore, the method according to the sixth aspect may be part of the method according to the second and/or fourth aspect.

According to a seventh aspect, a system for generating a tunable light pulse comprises a first optical parametric amplifier providing a first light pulse, a cw-laser seeding the first optical parametric amplifier with cw-light, and a pulsed laser pumping the first optical parametric amplifier. Therein, the cw-laser is provided as a tunable cw-laser wherein the wavelength of the cw-light is tunable. By tuning the wavelength of the cw-light that seeds the first OPA, the wavelength of the amplified light pulse is tuned.

The system according to the seventh aspect may be part of the system according to the first and/or third aspect. Therein, the system according to the seventh aspect may be used to generate the first light pulse as tunable first light pulse. The pulsed laser may pump the first OPA with a first fraction of the second light pulse.

The invention is further described by embodiments shown in the figures. Single features of these embodiments may be implemented in other embodiments. It is shown by:

Figure 1      a schematic drawing of the energies during Raman scattering;

Figure 2      a schematic drawing of the input and output spectra for Raman spectroscopy;

Figure 3      a schematic drawing of the energies in optical parametric amplification;

Figure 4      a schematic drawing of an embodiment of a system used in Raman spectroscopy;

Figure 5      a schematic diagram of another embodiment of a system used for stimulating Raman scattering;

Figure 6A     in a diagram a spectrum of pump and Stokes pulses and corresponding average powers;

Figure 6B     in sections (b) and (c) SRS images of samples taken with a system according to figure 5 when probed at their respective Raman resonances of 2953 cm$^{-1}$ (b) and 3060 cm$^{-1}$ (c), acquired with 30-ms pixel dwell time; and in sections (d) and (e) diagrams of cross sections of the images along the solid lines shown in sections (b) and (c);

Figure 7    in a schematic diagram a system for stimulating Raman scattering by providing synchronized pump and Stokes pulse;

Figure 8    in diagram (a) a signal tuning spectra over the whole tuning range from 1350 to 1750 nm central wavelength; in diagram (b) fine tuning in steps of 2 nm around 1575 nm using a spatial filter; and in diagram (c) the spectrum of a light pulse after broadening in a tapered fiber;

Figure 9    in diagrams a) to c) a variation of bandwidth by shaping a seed spectrum of a first OPA from 22 to 40 nm at 1575 nm central wavelength; and in diagrams d) to e) corresponding autocorrelations after a prism compressor;

Figure 10    in diagram a) a pulse-to-pulse stability over 2 $\mu$s; in diagram b) a temporal stability of average power over one hour measured with 10 Hz bandwidth at 1600 nm; and in diagram c) a spectral stability close to the edge of the tuning range at 1650 nm over one hour; and

Figure 11    in diagram a) a signal spectrum showing a tuning range starting at 1400 nm, tunable up to 2065 nm, where signal and idler are degenerate; and in diagram b) a seed spectrum emerging from a 24 cm long $CS_2$-filled capillary with 2.0 $\mu$m core diameter.

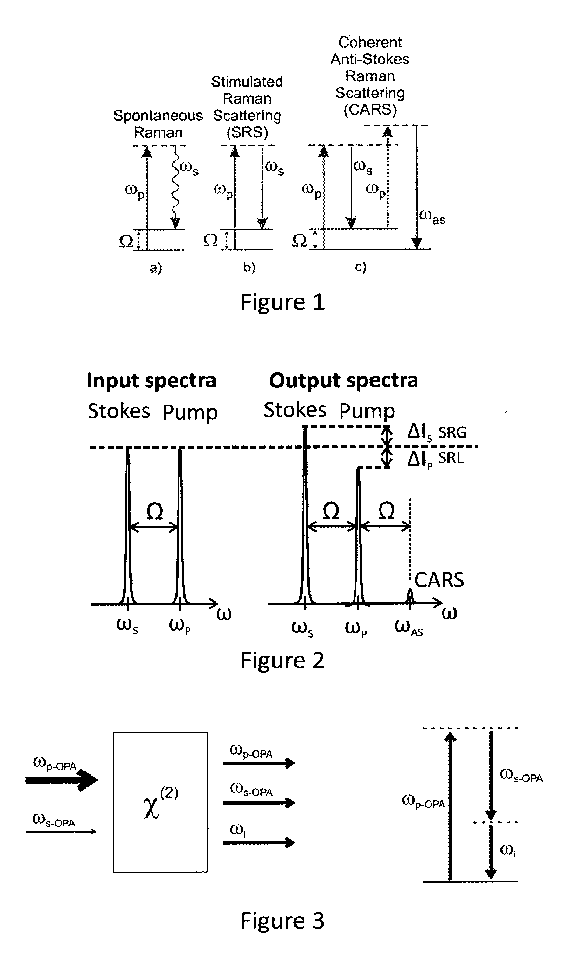

Figure 1 shows in three schematic drawings a), b), and c) the energies and photons involved during Raman scattering. Therein, figure 1 shows in schematic diagram a) a spontaneous Raman scattering. During spontaneous Raman scattering, an exemplary molecule absorbs a pump photon of the pump frequency $\omega_p$. Thereby, the exemplary molecule is excited to a higher energy level indicated by the dashed line. The higher energy level may be a virtual level. The excited molecule spontaneously emits a spontaneous photon at the spontaneous frequency $\omega_{s'}$. The spontaneous frequency $\omega_{s'}$ is lower than the pump frequency $\omega_p$ of the pump photon. Thus, the exemplary molecule remains in an excited vibrational state which is energetically higher by the vibrational energy $\Omega$ than the ground state.

Figure 1 shows in schematic diagram b) a stimulated Raman scattering (SRS): An exemplary molecule is excited to a virtual level by absorbing a pump photon at the pump frequency $\omega_p$. Simultaneously, a Stokes photon stimulates the emission of a stimulated photon at the Stokes frequency $\omega_S$. The exemplary molecule thereby reaches a vibration state at the energy $\Omega$, like during the spontaneous Raman scattering. However, the Stokes photon emitted by the exemplary molecule is coherent with the Stokes photon that stimulated the emission and, thus, amplifies the Stokes beam.

Figure 1 shows in schematic diagram c) a coherent anti-Stokes Raman scattering (CARS): An exemplary molecule is excited by absorbing a pump photon at the pump-frequency $\omega_p$. A Stokes photon stimulates the emission of a photon at the Stokes frequency $\omega_S$, thereby causing the molecule to arrive at a vibration state at the energy $\Omega$. Then, a further pump photon at the pump frequency $\omega_p$ is absorbed by the molecule, exciting the molecule further. From this excited state, the molecule returns to its ground state by emitting an anti-Stokes photon at the anti-Stokes frequency $\omega_{as}$.

Figure 2 shows in a schematic drawing the input spectra and output spectra of the light pulses involved during SRS and/or CARS. The input spectra at the left side of figure 2 comprises a pump pulse at the pump frequency $\omega_p$ and a Stokes pulse at the Stokes frequency $\omega_S$. Therein, the Stokes frequency $\omega_s$ is lower than the pump frequency $\omega_p$. The frequency difference between the pump frequency $\omega_p$ and the Stokes frequency $\omega_s$ corresponds to the vibration energy $\Omega$.

The two light pulses interact with a sample to be examined for a predetermined substance, e.g. the exemplary molecule described above in connection with figure 1. This results in the output spectra shown in the schematic diagram at the right side of figure 2. While the intensity of the pump pulse is lowered by the pump-pulse intensity difference $\Delta I_p$, the intensity of the Stokes pulse is increased by the Stokes-pulse intensity difference $\Delta I_S$. Furthermore, a new pulse, the anti-Stokes pulse, is visible in the output spectra at the anti-Stokes frequency $\omega_{as}$.

From at least one of the intensity differences $\Delta I_p$ and $\Delta I_S$, and/or the intensity of the anti-Stokes pulse, it can be calculated whether or not the exemplary molecule with the specific vibration energy of $\Omega$ exists in the examined sample.

Figure 3 shows in a schematic drawing the energies in optical parametric amplification, as it occurs in OPAs. Therein, an OPA pump pulse and an OPA seed light impact onto an OPA. The OPA pump pulse arrives at the OPA pump frequency $\omega_{p\text{-}OPA}$. The OPA seed light arrives at the OPA seed frequency $\omega_{s\text{-}OPA}$. The OPA pump pulse is used to pump the OPA, thereby providing the OPA with energy that the OPA uses to amplify the OPA seed light.

After interaction of the OPA pump pulse and the OPA seed light with the OPA, the intensity of the OPA pump pulse is decreased, while the intensity of the OPA seed light is amplified and concentrated in a pulse. Furthermore, an idler pulse is created at the idler frequency $\omega_i$. The idler pulse results from the energy conservation.

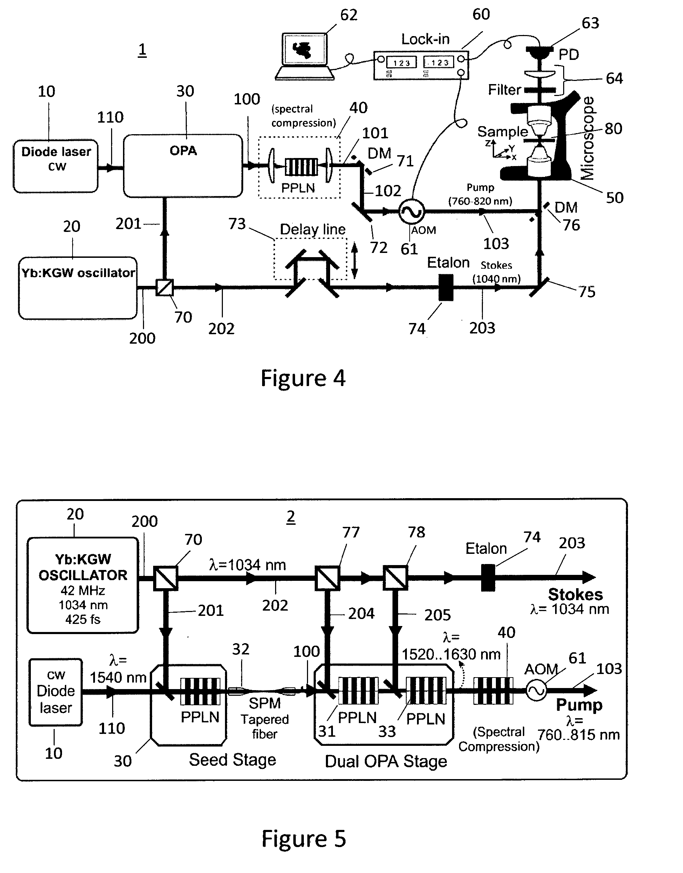

Figure 4 shows in a schematic drawing an embodiment of a system 1 used in Raman spectroscopy. The system 1 comprises a cw-laser 10 which may be implemented as diode laser. The cw-laser 10 emits cw-light 110 in a continuous wave, thereby seeding a first OPA 30.

The first OPA 30 generates a first light pulse 100 at the frequency of the cw-light 110. In the system 1 shown in figure 4, the frequency of the first light pulse 100 is tunable within a predetermined bandwidth.

A pulsed laser 20 provides a second light pulse 200 in well defined pulses. At a beam splitter 70 arranged in the path of the second light pulse 200, a first fraction 201 is split off the second light pulse 200. The first fraction 201 of the second light pulse is guided to the first OPA 30 where it pumps the first OPA at times at which the second light pulse 200 is emitted by the pulsed laser 20. Since the first OPA 30 is only pumped when a second light pulse is emitted, it only amplifies the cw-light 110 whenever it receives the first fraction 201 of the second light pulse. Thus, a passive synchronisation of the first light pulse 100 with the second light pulse 200 is achieved.

The first OPA operates according to the amplification principle shown in figure 3, with the frequency of the pulsed laser 20 used as OPA pump frequency $\omega_{p\text{-}OPA}$ and the frequency of the cw-light 110 as the OPA seed frequency $\omega_{s\text{-}OPA}$.

A second fraction 202 of the second light pulse 200 is provided by the beam splitter 70. The second fraction 202 of the second light pulse may consist of the second light pulse 200 minus the first fraction 201 of the second light pulse. The second fraction 202 of the second light pulse is guided through a converter to convert the second fraction 202 of the second light pulse 200 into a Stokes pulse 203.

The converter comprises a delay line 73 with multiple mirrors and/or an etalon 74 further delaying and/or narrowing the bandwidth of the second fraction 202 of the second light pulse. In the embodiment shown in figure 4, the etalon 74 increases the pulse length from originally about 450 fs to about 2 ps. Thus, the second light pulse 200 is converted into the Stokes pulse 203 of the system 1. In the embodiment shown in figure 4, the Stokes pulse 203 comprises light at the wavelength of about 1033 nm or 1040 nm corresponding to the wavelength of the pulsed laser 20 which is implemented as a mode-locked Yb:KGW oscillator.

The Stokes pulse 203 is reflected at a second mirror 75 towards a beam combiner 76 combining the Stokes pulse with a pump pulse 103.

To provide an appropriate pump pulse 103 which is synchronised to the Stokes pulse 203, the first light pulse 100 is guided through a frequency adjuster 40 where the wavelength of first light pulse 100 is divided by two. The frequency adjuster 40 may, e.g., be implemented as a SHG crystal. By a proper design of the frequency adjuster 40, a spectrally compressed first light pulse 101 is generated that is filtered by a dichroic mirror 71 into a filtered first light pulse 102. The dichroic mirror 71 filters out light from the pulse that was not converted by the frequency adjuster 40. The filtered first light pulse 102 is reflected at a first mirror 72 and is then modulated by an acousto-optic modulator 61 (abbreviated as: 'AOM'). Thus, the first light pulse 100 is converted into the pump pulse 103 at a tunable wavelength, in an exemplary embodiment at a wavelength between 760 nm and 820 nm.

At the beam combiner 76, the Stokes pulse 203 and the pump pulse 103 are provided as synchronised pulses comprising a predetermined, tunable frequency difference with an input spectrum according or similar to the input spectrum shown in figure 2. The Stokes pulse 203 and the pump pulse 103 are input into a microscope 50 as input spectra.

The microscope 50 holds a sample 80 which is to be examined for a chosen substance comprising a molecule with a vibrational energy corresponding to the tunable frequency difference between the Stokes pulse 203 and the pump pulse 103. The Stokes pulse 203 and the pump pulse 103 are synchronised so that they at least overlap at the beam combiner 76 and, thus, in the microscope 50.

Within the microscope 50, the Stokes pulse 203 and the pump pulse 103 interact with the sample 80, similar to the SRS and/or CARS mechanism described above e.g. with regard to figures 1 and 2. The microscope 50 lets an output beam pass which is detected by a detector 60 and which comprises an output spectrum similar to the one shown in Fig. 2. The output beam may be guided through detection optics 64 and is registered by a photo diode 63. The detector 60 may comprise a computer 62 which helps with the evaluation of the output spectra. A lock-in amplifier of the detector 60 may be connected to the AOM 61 to modulate the pump pulse 103 in a way suitable for detection.

The embodiment shown in figure 4 is exemplary. Multiple variations of the embodiment are possible in alternative embodiments. For example, a second OPA may be used to further amplify one or more of the light pulses. The pulses may be guided by more and/or different guiding means. Furthermore, different conversion means may be provided and arranged to convert the first pulse 100 and/or the second pulse 200 into the pump pulse 103 and the Stokes pulse 203.

An embodiment may be used for detecting the stimulted Raman gain (abbreviated as 'SRG'), wherein the pump pulse is modulated and the Stokes pulse is detected. Another embodiment may be used for detecting the stimulated Raman loss (abbreviated as 'SRL'), wherein the Stokes pulse is modulated and the pump pulse is detected.

A system using a solid-state laser as pulsed laser (as in the system 1 shown in Fig. 4) is preferably used for SRG, since the signal-to-noise ratio of the pulsed solid-state laser enables a very precise detection.

The invention is further described by two experiments showing embodiments of the invention. Single features of the embodiments described in the experiments may be implemented in other embodiments.

First experiment

As an embodiment according to a first experiment, an a highly stable and compact laser source for stimulated Raman scattering microscopy is described. Therein, cw seeding, a solid-state Yb-oscillator, a pumped OPA, and SPM in a tapered fiber allow for broad tunability and extremely low noise levels.

Coherent Raman Scattering (CRS) microscopy is gaining increasing recognition in biomedical optics due to its capability of non-invasive, label-free imaging of tissues and cells based on their characteristic vibrational response. After Coherent Anti-Stokes Raman Scattering (CARS), other techniques, such as Stimulated Raman Scattering (SRS), have been realized. SRS is recognized to be superior to CARS, as it is free from non-resonant background and its signal scales linearly with molecular concentration. Despite their unique capabilities, practical applications of CRS techniques have been so far confined to high-tech research laboratories, mostly due to complexity of the adopted excitation laser sources, which have hampered widespread use in the biological and medical communities.

CRS microscopy requires preferably the generation of two narrowband, synchronized pulse trains (pump and Stokes) with tunable frequency difference, high repetition rate ($\approx$100 MHz) and output power >100 mW per branch. Currently adopted systems comprise an optical parametric oscillator (abbreviated as 'OPO'), and are complex and expensive. Considerable research effort is being devoted to the development of compact fiber-format systems, based on either Er:fiber or Yb:fiber technology followed by nonlinear spectral broadening and frequency conversion. However, fibers lasers intrinsically suffer from excess high-frequency noise with respect to their bulk counterparts, preventing sensitive detection of the weak nonlinear SRS signal, sitting on top of a large linear background. SRS imaging with fiber lasers is typically performed using balanced detection schemes which require sophisticated noise-cancelling electronics.

**Figure 5** shows the embodiment in a schematic diagram of the experimental system used for SRS. Therein, a compact, low-cost solution is provided for SRS microscopy based on a bulk all-solid-state Yb oscillator followed by an optical parametric amplifier (OPA). This system is simple to operate and removes the technical complications associated with the OPO or with electronic synchronization. The outstanding stability of the Yb oscillator enables high quality SRS imaging without balanced detection.

The exemplary system starts with a mode-locked Yb:KGW oscillator producing 425 fs pulses with 42 MHz repetition rate and 7 W average power as second light pulse. A 2 W fraction of the pulse energy is spectrally filtered by an etalon, resulting in 1034 nm Stokes pulses with 10 cm$^{-1}$ bandwidth and >200 mW average power.

The remaining power pumps a first OPA stage, based on a 10 mm long periodically poled lithium niobate (PPLN) crystal and seeded by a cw laser diode at 1540 nm. cw-seeding removes synchronization issues in the OPA and results in clean pulses with 10-nm bandwidth and 300 mW average power at 1540 nm. In the embodiment, the seed pulses are broadened by self-phasemodulation (SPM) in a tapered fiber, and the fiber output feeds two further PPLN-based OPA stages as second and third OPA, resulting in 200 fs pulses, with >500 mW average power and tunability from 1520 to 1640 nm.

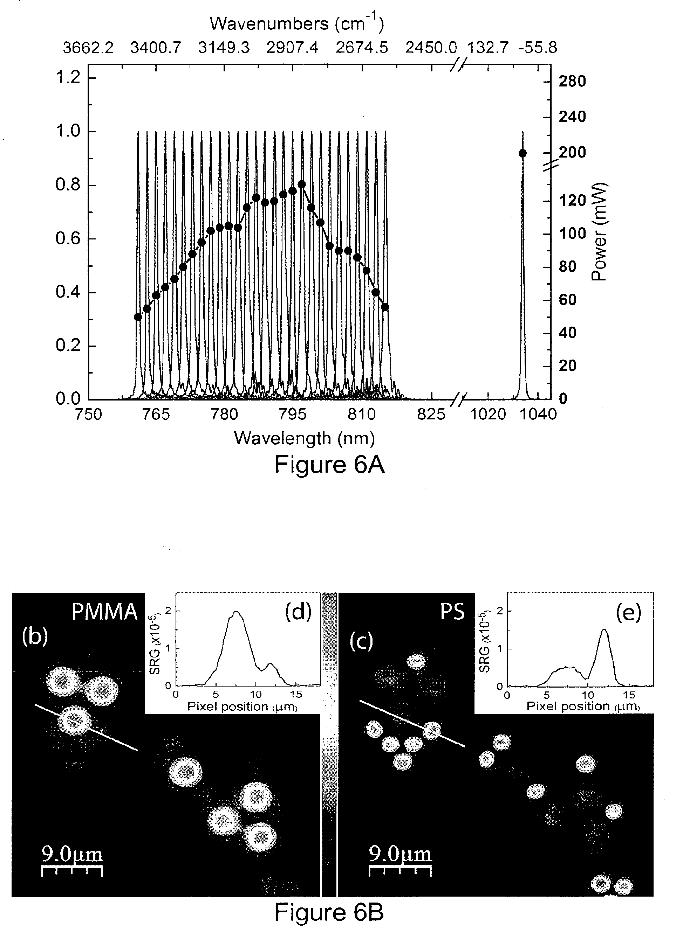

Finally, second-harmonic spectral compression in another PPLN crystal produces the <20 cm$^{-1}$ bandwidth pump pulses, tunable from 760 to 815 nm and allows frequency detuning from 2600 to 3400 cm$^{-1}$ with an average power of the order of 100 mW, as shown in a diagram in figure 6A. Thus, both pump and Stokes beam have powers that are fully adequate for SRS imaging in typical biomedical applications.

Pump and Stokes pulses are collinearly combined by a dichroic beam-splitter and sent to the SRS microscope. In order to exploit the exceptional stability of the bulk Yb:KGW laser, the pump beam is acousto-optically modulated by an AOM. The stimulated Raman gain (abbreviated as 'SRG') of the Stokes beam is detected.

**Figure 6B** shows in sections (b) and (c) SRS images of a sample composed by a mixture of poly-methyl methacrylate (PMMA) and polystyrene (PS) beads when probed at their respective Raman resonances of 2953 (see section b) and 3060 cm$^{-1}$ (see section c). The beads of PMMA comprise a diameter of about 6 $\mu$m, while the beads of PS comprise a diameter of about 3 $\mu$m. The SRS images are acquired with 30-ms pixel dwell time.

Despite the relatively low value of the stimulated Raman gain (<2x10$^{-5}$) the images are extremely clean, with signal-to-noise ratio in excess of 100 even without the use of differential detection.

In sections (d) and (e), Fig. 6B shows diagrams of cross sections of the SRS images along the solid lines shown in sections (b) and (c) of Fig. 6B.

Summarizing, the first embodiment presents a novel compact all solid-state system for CRS spectroscopy, based on a bulk mode-locked Yb:KGW oscillator driving a cw-seeded OPA. The system is significantly simpler with respect to existing solutions based on bulk lasers, and at the same time avoids the excess noise intrinsic in fiber lasers, allowing high-quality SRS imaging without balanced detection. In a future upgrade of the system, the first OPA stage will be seeded by a tunable laser diode, avoiding SPM in the fiber and even further simplifying the setup.

Second experiment

As an embodiment according to a second experiment, cw-seeding is combined with highly nonlinear fibers in a broadly tunable femtosecond optical parametric amplifier at 42 MHz.

Therein is described a precisely tunable and highly stable femtosecond oscillator-pumped optical parametric amplifier at 41.7 MHz repetition rate for spectroscopic applications. A novel concept based on cw-seeding of a first amplification stage with subsequent spectral broadening and shaping, followed by two further amplification stages, allows for precise sub-nanometer and gap-free tuning from 1.35 to 1.75 $\mu$m and 2.55 to 4.5 $\mu$m. Excellent spectral stability is demonstrated with deviations of less than 0.008% rms central wavelength and 1.6% rms bandwidth over one hour. Spectral shaping of the seed pulse allows precise adjustment of both bandwidth and pulse duration over a broad range at a given central wavelength. Nearly transform-limited pulses as short as 107 fs are achieved. More than half a Watt of average power in the near- and more than 200 mW in the mid-infrared with power fluctuations less than 0.6% rms over one hour provide an excellent basis for spectroscopic experiments. The pulse-to-pulse power fluctuations are as small as 1.8 %. Further, it is demonstrated for the first time that by using hollow core capillaries with highly nonlinear liquids as host medium for spectral broadening, the signal tuning range can be extended and covers the region from 1.4 $\mu$m up to the point of degeneracy at 2.07 $\mu$m. Hence, the idler covers 2.07 to 4.0 $\mu$m.

The generation of coherent multi-wavelength near infrared laser radiation is essential for future breakthroughs in spectroscopic applications. As an example, both coherent anti-Stokes and stimulated Raman scattering spectroscopy require tunable low-noise ultrafast laser sources. Approaches to generate synchronized pump and Stokes beams are electronically and optically synchronized solid-state lasers, combined fiber amplifier systems, where pulses from a master oscillator are spectrally broadened in highly nonlinear fibers and then amplified by Yb-, Er-or Tm-fiber amplifiers, synchronously pumped optical parametric oscillators (OPOs), and, at low repetition rates, optical parametric amplifiers (OPAs).

These parametric sources simultaneously generate mid-infrared wavelengths, which are highly important to extend the wavelength range into the molecular fingerprint region from 2 to 12 $\mu$m. In this spectral region various applications such as medical diagnostics, surgery, imaging, remote sensing, and chemical detection generate a strong demand for powerful and reliable laser sources. The main advantage of parametric sources beside the synchronized outputs is their ultrabroad tunability of several $\mu$m in comparison with mid-infrared laser systems that are limited to the gain bandwidth of the laser medium.

A major disadvantage of OPO systems is the requirement for active cavity stabilization to maintain the synchronous operation and to stabilize power and wavelength. Typical OPA systems are pumped by regenerative amplifiers with several kHz repetition rate and therefore suffer from low average power obtained from large and complex setups.

In the second experiment, a compact broadly tunable oscillator-pumped second OPA at 41.7 MHz repetition rate is seeded by a broad continuum from a tapered fiber, the tapered fiber being pumped by a cw-seeded first OPA, which is operated in the center of the system tuning range. This fiber pump wavelength is shifted spectrally with respect to the oscillator and allows to employ highly nonlinear liquids such as $CS_2$ in hollow-core capillaries as viable alternative to tapered or photonic crystal fibers.

The cw-seeded first OPA involves a minimum amount of optical components, benefits from easy alignment, and represents a long-term stable and reliable femtosecond source at any desired wavelength, only limited by the transmission of the nonlinear crystal. A main advantage is that no spectral broadening of the pump by thirdorder parametric processes is required, since the conversion is easily obtained by a single pass in a nonlinear crystal at the presence of a cw-seed. Hence, there are very low timing-jitter effects, and since a solid-state oscillator is employed as pump source, low high-frequency noise can be achieved in comparison with fiber amplifier systems.

Pumping the nonlinear fiber in the center of the OPA tuning range is superior to systems, where the supercontinuum and the OPA are pumped at the same wavelength, since in the latter case very broad supercontinua are required. For these it is often difficult to maintain the coherence, since especially at high repetition rate one needs to pump in the anomalous dispersion regime to reach large bandwidths. Both approaches; the tapered fiber and the highly nonlinear liquid-filled fiber, are operated mainly in the normal dispersion regime or very close to the zero dispersion wavelength (ZDW).

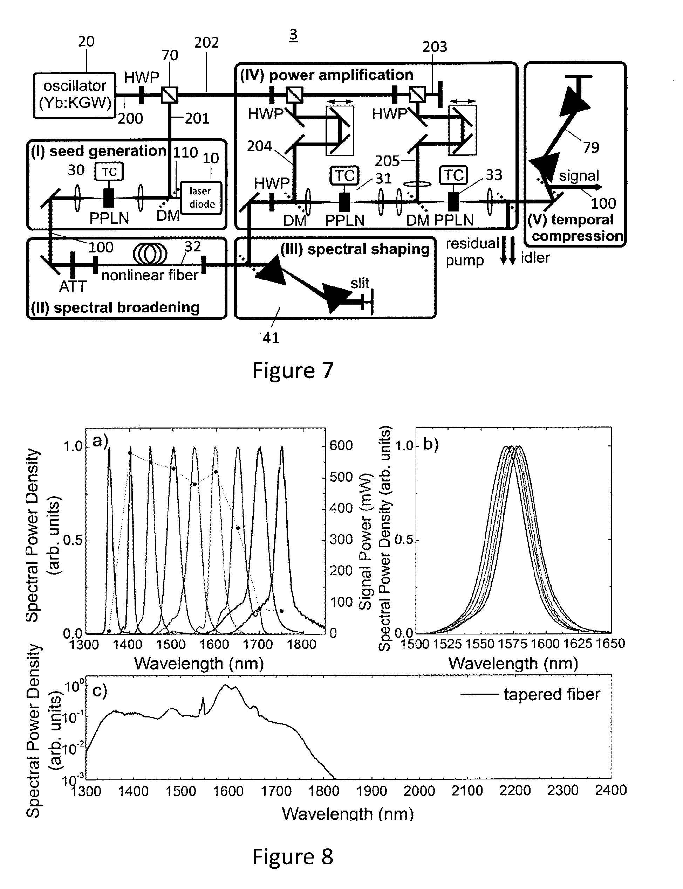

**Figure 7** shows in a schematic diagram the system tested in the experiment. The experimental setup comprises a cw-seeded parametric amplification stage (I), a thin tapered or liquid-filled fiber (II), a prism monochromator (III), a parametric power amplifier (IV), and a prism compressor sequence (V). Therein, half-wave plates are marked with 'HWP', dichroic mirrors are marked with 'DM', variable attenuators are marked with 'ATT', temperature controllers are marked with 'TC', and periodically poled lithium niobate crystals are marked with PPLN.

The system according to the embodiment of the second experiment is pumped by an Yb:KGW solid-state oscillator capable of delivering 7.4 W at 41.7 MHz and 1033 nm with a pulse duration of 450 fs. This pulsed laser is directly followed by a cw-seeded parametric conversion stage as shown in Fig. 7. A 10 mm long MgO:PPLN crystal is used to generate up to 300 mW at 1540 nm with a pulse duration of 250 fs by using 1.5 W of pump power. The cw-seed is provided by a Fabry-Perot laser diode with 20 mW power at 1540 nm. The pulses with 12.5 nm bandwidth are slightly chirped due to the large crystal length. This seed is then spectrally broadened in a nonlinear fiber. Both a thin tapered fiber with 1.25 $\mu$m waist diameter and 8.5 cm waist length and a CS$_2$-filled capillary with 2 $\mu$m core diameter and 24 cm fiber length are employed for spectral broadening.

While the easy handling of the tapered fiber provides more stable and higher output power, the huge nonlinearity of the liquid-filled fiber provides extremely broad seed spectra. The generated broadband spectra are spectrally shaped using a prism sequence and a mechanical slit as tunable filter. This ensures that only a narrow linewidth seed is used for the subsequent power amplification stages. For the first parametric amplification stage, the spectrally shaped seed is amplified to a power level of approximately 50 mW at a pump power of 1.4 W in a 5 mm long MgO:PPLN crystal with poling periods from 26.5 to 31.5 $\mu$m. The second stage uses an identical 3 mm long crystal and is pumped with 2.5 W power, amplifying the signal to the Watt level. This two-stage scheme ensures that relative timing-jitters between seed and pump source, which can arise from soliton formation in nonlinear fibers, are eliminated. Finally, the pulses are temporally compressed in a prism compressor behind the second amplification stage.

For the tapered fiber case, which will be discussed first, the generated seed spectrum is shown in **figure 8, section c)**. The pump pulses at 1540 nm are very close to the ZDW of the tapered fiber of 1590 nm. Therefore, the broadened spectrum shows a mixture of a single solitonic peak at 1600 nm and a broad plateau ranging from 1350 to 1750 nm which originates mainly from self-phase-modulation, leading to good coherence of the supercontinuum. For wavelengths shorter than 1750 nm, optical parametric generation (abbreviated as 'OPG') is efficiently suppressed by the seed.

The spectral filter allows to cut out a narrow region of this spectrum with adjustable linewidth down to 15 nm (FWHM), which is then used as seed for the first parametric amplification stage.

The tuning spectra shown in **Fig. 8, section a)**, shows continuous signal tunability from 1350 to 1750 nm. This matches well with the seed bandwidth. The signal power level is around 500 mW in the range from 1400 to 1600 nm and then drops due to the decreasing seed power down to 100 mW at 1750 nm. Hereby, the preamplifier generates several tens of mW which are then amplified in the main amplifier by a factor of 5 to 10, depending on wavelength. Signal power up to 1 W is obtained if the bandwidth is not limited by the spectral filter, but this also causes spectral and power instabilities over time.

The precisely adjustable seed also allows for precise gap-free fine tuning of the signal wavelength tuning in steps of 2 nm around 1575 nm using a spatial filter as shown in **Fig. 8, section b)**.

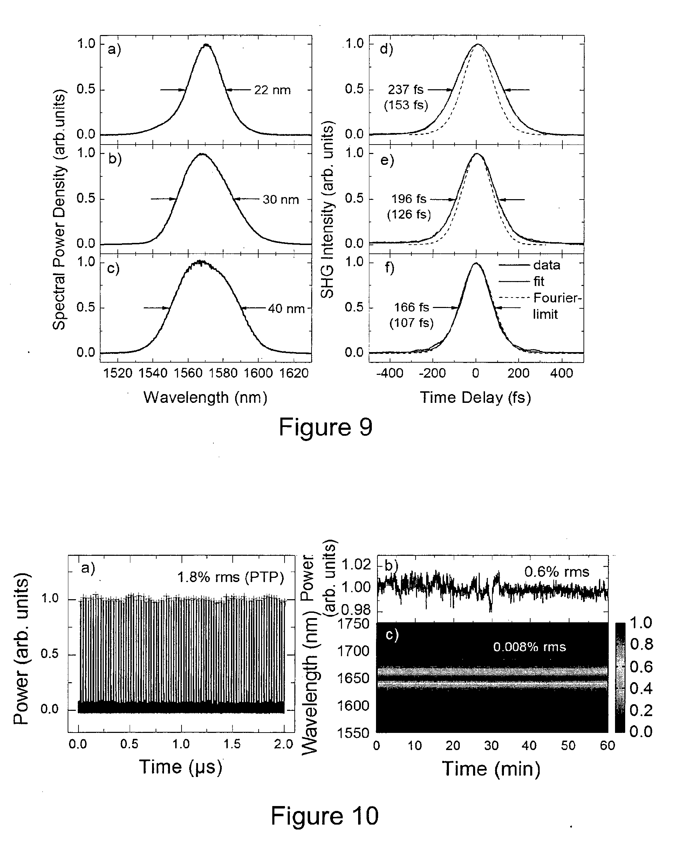

By tuning the seed bandwidth with the spatial filter, the signal bandwidth can be influenced, which is depicted in **Fig. 9**. At a central wavelength of 1575 nm, the bandwidth can he varied continuously from 22 to 40 nm, see Fig. 9, diagrams a) to c). Since this requires a broad parametric gain bandwidth, the achievable bandwidths are wavelength dependent and increase for higher wavelengths. Fig. 9 further shows in diagrams d) to f) corresponding autocorrelations and that after the prism compressor almost transform-limited pulses are obtained with pulse durations as low as 107 fs. Before compression, the pulse duration is typically on the order of 180 fs. The shown values are autocorrelation FWHM and pulse duration assuming sech$^2$ pulses (embraced value). Compression is particularly useful for pulses with high spectral bandwidth, since the pulse duration behind the second conversion stage remains approximately constant at 180 fs, due to the duration of the pump pulse. A pulse duration of less than 150 fs after compression can be reproduced in the signal tuning range from 1450 nm to at least 1600 nm, which is the upper limit of autocorrelator of this embodiment. For shorter wavelengths, the narrow parametric gain bandwidth leads to longer pulses on the order of 200 fs.

The system further shows excellent temporal stability on both the microsecond timescale and over several hours. **Fig. 10** shows that the pulse-to-pulse power fluctuations are within 1.8% rms which is due to the combination of a coherent seed and a two-stage power amplifier. Fig. 10 shows in diagram a) the pulse-to-pulse stability over 2 $\mu$s. Further, the temporal stability of the average power is as good as 0.6% rms over one hour measured with 10 Hz bandwidth at 1600 nm, see Fig. 10, diagram b). Fig. 10 shows in diagram c) the spectral stability close to the edge of the tuning range at 1650 nm and that the central wavelength deviates less than 0.008% rms over one hour, while the bandwidth varies by 1.6% rms over the same timespan.

Due to the wavelength-dependence of both the parametric gain and the gain bandwidth, the performance also changes with wavelength. Increasing the wavelength will result in lower performance, while decreasing the wavelength will in general lead to better performance. The performance will increase if the wavelength is chosen closer to the cw-seed wavelength of 1540 nm.

However, in the embodiment, there is optimum performance close to 1540 nm due to the fact that there is less broadening of the seed required and therefore both the seed spectral power density and seed stability increase.

Altogether, the single-pass scheme makes this system very robust to environmental conditions, while the high parametric gain in the power amplifier ensures inherently stable operation. Unlike for comparable OPOs there is neither synchronous pumping nor active stabilization required.

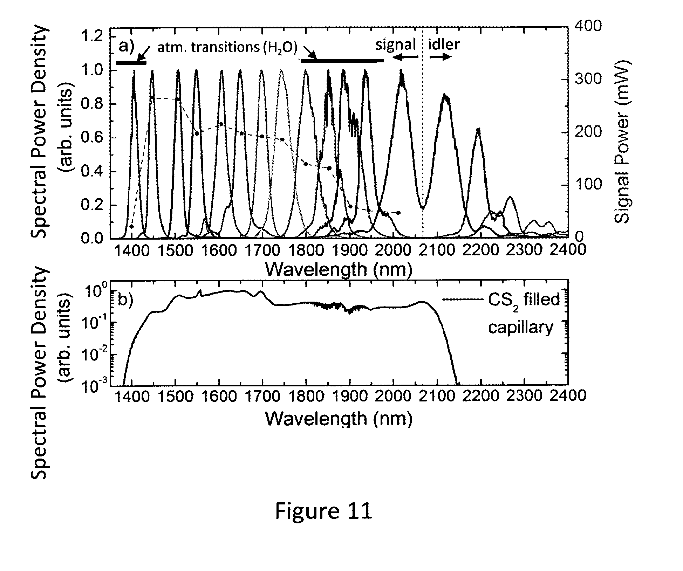

By replacing the tapered silica fiber with a liquid-filled capillary fiber with a 2 $\mu$m core of CS$_2$ and a total length of 24 cm, the tuning range of the system can be extended from 1400 to 2065 nm, as shown in **Fig. 11, diagram a)**. The signal can be tuned up to 2065 nm, where signal and idler are degenerate. The measured power for signal wavelengths higher than 1750 nm includes a share of the idler, which is also visible in the spectrum. The generated idler ranges from 2.07 to 4.0 $\mu$m.

The very broad seed spectrum (cf. **Fig. 11, diagram b**) from the highly nonlinear $CS_2$-filled capillary ranges from 1400 to 2125 nm. The broadening takes place in the normal dispersion regime under strong influence of self-phase modulation and retarded response effects. The flat and smooth spectrum facilitates the spectral shaping of the seed pulses. Both the seed and the signal spectra are taken with a grating spectrometer in free-space configuration, so that a distance of 1 to 4 m in air has been passed, which explains the absorption lines due to water vapor in the 1800 to 1950 nm region.

The maximum OPA signal power is lower compared to the tapered fiber case, since the spectral power density obtained from the liquid-filled fiber is significantly lower. While the spectrum covers a bandwidth of 900 nm, the actual output power is on the order of 20 to 30 mW compared to up to 50 mW from the tapered fiber. Further, the allowed delay between seed and pump pulses of the first stage indicates that the pulses from the liquid-filled capillary are strongly chirped and last several picoseconds. All in all, the seed peak power is lower compared to the tapered fiber by at least a factor of four after the spectral shaper, which explains the lower signal power.

The limiting factor for the transmitted power is mainly the rather low coupling efficiency to the 2 $\mu$m core for the liquid-filled fiber. Due to the not transmitted part of the seed beam, the fiber input end heats up and evaporates the liquid, hence destroying the fiber input coupling and limiting the fiber input power. In contrast to the silica fiber which is used to couple into the tapered fiber, the liquid-filled fiber turns out to be sensitive on environmental conditions, and the system may be realigned over time. For a time frame of several minutes, the system showed good performance without realignment. Technical engineering such as scaling the liquid-filled capillary by splicing silica fibers at both ends may improve the performance.

The optical parametric amplification scheme is able to cover a tuning range of 1.35 to 4.5 $\mu$m with adjustable spectral bandwidth in the range of 20 to 40 nm. The nearly transform-limited femtosecond pulses from 100 to 200 fs show significant pulse shortening compared to the pulse duration of the pump source of 450 fs. With a tapered fiber for spectral broadening, the system exhibits excellent short- and long-term temporal and spectral stability without the need for active stabilization mechanisms. By employing a $CS_2$-filled capillary instead of a tapered fiber, the tuning range may be extended significantly.

**List of Reference Numerals**

| | |
|---|---|
| 1 | system |
| 2 | system |
| 3 | system |
| 10 | cw-laser |
| 20 | pulsed laser |
| 30 | first OPA |
| 31 | second OPA |
| 32 | optically nonlinear medium |
| 33 | third OPA |
| 40 | frequency adjuster |
| 41 | filter |
| 50 | Raman microscope |
| 60 | detector |
| 61 | AOM |
| 62 | computer |
| 63 | photo diode |
| 64 | detection optics |
| 70 | first beam splitter |
| 71 | dichroic mirror |
| 72 | first mirror |
| 73 | delay line |
| 74 | etalon |
| 75 | second mirror |
| 76 | beam combiner |
| 77 | second beam splitter |
| 78 | third beam splitter |
| 79 | compression means |
| 100 | first light pulse |
| 101 | spectrally compressed first light pulse |
| 102 | filtered first light pulse |
| 103 | pump pulse |
| 110 | cw-light |
| 200 | second light pulse |
| 201 | first fraction of the second light pulse |
| 202 | second fraction of the second light pulse |
| 203 | Stokes pulse |
| 204 | third fraction of the second light pulse |
| 205 | fourth fraction of the second light pulse |
| $\Delta I_p$ | pump pulse intensity difference |
| $\Delta I_S$ | Stokes pulse intensity difference |
| $\omega_{as}$ | anti-Stokes frequency |
| $\omega_i$ | idler frequency |
| $\omega_p$ | pump frequency |
| $\omega_{p\text{-}OPA}$ | OPA pump frequency |
| $\omega_s$ | Stokes frequency |
| $\omega_{s\text{-}OPA}$ | OPA seed frequency |
| $\Omega$ | vibration energy |

**Claims**

1. System for coherent Raman spectroscopy, comprising:

   - a first optical parametric amplifier (30) providing a first light pulse (100),
   - a pulsed laser (20) providing a second light pulse (200) such that a first fraction (201) of the second light pulse (200) pumps the first optical parametric amplifier (30), and
- a cw-laser (10) seeding the first optical parametric amplifier (30),

wherein the first light pulse (100) and a second fraction (202) of the second light pulse (200) are converted into a synchronised pump pulse (103) and Stokes pulse (203) for coherent Raman spectroscopy with a predetermined tunable frequency difference between the pump pulse (103) and the Stokes pulse (203).

2. System according to claim 1, wherein an optically nonlinear medium (32) is arranged in the path of the first light pulse (100) or the second light pulse (200) such that the optically nonlinear medium (32) broadens the spectrum of said light pulse, and wherein an adjustable filter filters the broadened light pulse such that only a predetermined bandwidth from the broadened spectrum of the light pulse passes the adjustable filter, thereby providing a tunable light pulse (100) seeding a second optical parametric amplifier (31).

3. System according to claim 2, wherein the second optical parametric amplifier (31) is pumped by a third fraction (204) of the second light pulse (200).

4. System according to any of the preceding claims, wherein the cw-laser (10) seeding the first optical parametric amplifier (30) is provided as tunable cw-laser.

5. System according to any of the preceding claims, wherein the pump pulse (103) and the Stokes pulse (203) are provided at repetition rates of at least 10 MHz.

6. System according to any of the preceding claims, wherein the pulsed laser (20) is provided as mode-locked solid-state laser providing the second light pulse (200) in pulses shorter than 5 ps.

7. System according to any of the preceding claims, wherein the pulsed laser (20) is provided as a Yb:KGW oscillator providing the second fraction (202) of the second light pulse as the Stokes pulse (203) at a wavelength of about 1034 nm.

8. System according to any of the preceding claims, wherein the cw-laser (10) is provided as cw-laser diode providing an effective seeding power of less than 10 $\mu$W.

9. System according to any of the preceding claims, wherein the first optical parametric amplifier (30) comprises an optically nonlinear material with a nonlinearity of at least $d_{eff}$=10 pm/V.

10. System according to any of the preceding claims, wherein a frequency adjuster (40) is provided in the path of either the first (100) or the second light pulse (200) such that it adjusts the frequency of said light pulse.

11. Method for providing a synchronised pump pulse and Stokes pulse for coherent Raman spectroscopy, comprising:

- providing a first light pulse (100) by a first optical parametric amplifier (30),
- providing a second light pulse (200) by a pulsed laser (20),
- pumping the first optical parametric amplifier (30) by a first fraction (201) of the second light pulse (200),
- seeding the first optical parametric amplifier (30) by a cw-laser (10), and
- converting the first light pulse (100) and a second fraction (202) of the second light pulse into the synchronised pump pulse (103) and Stokes pulse (203) with a predetermined tunable frequency difference between the pump pulse (103) and the Stokes pulse (203).

12. System for generating a tunable light pulse, comprising:

- a first optical parametric amplifier (30) providing a first light pulse (100),
- a cw-laser (10) seeding the first optical parametric amplifier (30),
- a pulsed laser (20) pumping the first optical parametric amplifier (30),
- an optically nonlinear medium (32) arranged in the path of the first light pulse (100) such that the optically nonlinear medium (32) broadens the spectrum of the first light pulse (100) provided by the first optical parametric amplifier (30), and
- an adjustable filter providing the tunable light pulse by filtering the broadened first light pulse (100) such that only a predetermined bandwidth from the broadened spectrum of the first light pulse (100) passes the adjustable filter.

13. Method for providing a tunable light pulse, comprising:

- providing a first light pulse (100) by a first optical parametric amplifier (30),
- continuously seeding the first optical parametric amplifier (30),
- pumping the first optical parametric amplifier (30) in pulses,
- broadening the spectrum of the first light pulse (100) provided by the first optical parametric amplifier (30) with an optically nonlinear medium (32), and
- filtering the broadened light pulse such that only a predetermined bandwidth from the broadened spectrum of the first light pulse (100) is used as the tunable light pulse.

14. System for generating a tunable light pulse, comprising:

- a first optical parametric amplifier (30) providing a first light pulse (100),
- a cw-laser (10) seeding the first optical parametric amplifier (30) with cw-light (110), and
- a pulsed laser (20) pumping the first optical parametric amplifier (30), wherein the cw-laser (10) is provided as a tunable cw-laser wherein the wavelength of the cw-light (110) is tunable.

Figure 1

Figure 2

Figure 3

Figure 4

Figure 5

Figure 6A

Figure 6B

Figure 7

Figure 8

Figure 9

Figure 10

Figure 11

Europäisches
Patentamt

European
Patent Office

Office européen
des brevets

## EUROPEAN SEARCH REPORT

Application Number

EP 14 00 2783

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TOBIAS STEINLE ET AL: "Combining cw-seeding with highly nonlinear fibers in a broadly tunable femtosecond optical parametric amplifier at 42??MHz", OPTICS LETTERS, vol. 39, no. 16, 13 May 2014 (2014-05-13), pages 4851-4, XP055163556, ISSN: 0146-9592, DOI: 10.1364/OL.39.004851 * figure 1 * * column 3, line 1 - line 10 * | 1-14 | INV. G01J3/02 G01J3/44 G01J3/10 |

TECHNICAL FIELDS
SEARCHED        (IPC)

G01J

The present search report has been drawn up for all claims

| Place of search | Date of completion of the search | Examiner |
|---|---|---|
| Munich | 23 January 2015 | Parise, Berengere |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................
& : member of the same patent family, corresponding
    document

EPO FORM 1503 03.82 (P04C01)